# EUROPEAN PATENT SPECIFICATION

(11) **EP 3 489 411 B1**
(45) Date of publication and mention of the grant of the patent: **30.12.2020**
(21) Application number: 18208424.4
(22) Date of filing: 27.11.2018
(51) Int. Cl.: D21F 1/40, D21H 23/58, D21F 3/08, D21F 3/10, D21G 1/02

(54) **ROLL AND ITS USE**
WALZE UND DEREN VERWENDUNG
ROULEAU ET SON UTILISATION

(30) Priority: 28.11.2017 FI 20176066
(43) Date of publication of application: 29.05.2019
(73) Proprietor: Valmet Technologies Oy, 02150 Espoo (FI)
(72) Inventor: TURUNEN, Jani, 02150 Espoo (FI)
(74) Representative: Berggren Oy, Turku

(56) References cited:
- WO-A1-2011/128491
- DE-A1-102004 056 318
- DE-A1-102007 000 505
- US-B2- 8 647 475

## Description

The present invention relates to a roll and its use according to the preambles of the enclosed independent claims.

Various polymer coated rolls are used in manufacture of fibrous webs, such as webs of paper, board, tissue or the like. Rolls can be used in several parts of the manufacturing process, both in paper, board and tissue machines, as well as in converting and finishing machines, such as calenders and coating units. Non-limiting examples of various polymer coated rolls are calender rolls, coater rolls, reeling drums, press rolls and guide rolls.

Conventionally the rolls are coated with one or several polymer layers. Roll cover typically comprises a polymer matrix, where various fillers, reinforcing fibres and/or additives may be included. The mechanical properties of the roll cover are influenced by the polymer matrix itself as well as by the used fillers, reinforcing fibres and/or modifiers. The fillers, fibres and/or modifiers change the mechanical properties of the roll cover, and consequently of the roll surface.

The roll and roll covers are subjected to extreme conditions in manufacture of fibrous webs. They must tolerate high rotational speeds, and the associated forces. Furthermore, they come into contact with fast moving fibrous web and possibly also other process equipment, such as doctor blades. They may also be subjected to a press from an adjacent roll. The requirements for mechanical resistance, wear resistance, impact resistance, tensile strength and hardness are thus rigorous for the roll covers. Furthermore, the emphasis between the various requirements varies depending on the location of the roll in the fibre manufacturing process.

Maybe the harshest conditions for roll covers are encountered by calender rolls and press rolls which are in a nip contact against a counter roll. The size of the calender rolls is typically 3 - 12 m in length and 400 - 1500 mm in diameter. The magnitude of linear loads in these rolls can be as high as 300 - 600 N/mm. The modern calender rolls are most often covered by fibre reinforced epoxy. The role of the roll cover is important not only for the process runnability but also to the paper product itself. The paper web is led to the calender nip unsupported, i.e. without a supporting fabric, wherein the paper web comes in a direct contact with the calender roll surfaces. The gloss and smoothness of the finished paper is created in calender nips, and also the bulk of the produced paper is either saved or lost there.

When more elasticity is needed a roll covered by polyurethanes or rubber mixtures can be used. Such rolls comprise press rolls in press section of the paper or board machine, suction rolls in wire section and in press section, as well as sizer rolls and film transfer rolls in surface finishing or coating of the web. In those positions roll surface is in abrading contact with the web or the fabric supporting the web, and, in addition, the roll surface is exposed to high loads in a nip contact with a counter roll.

The above-mentioned rolls are thus exposed to and must survive in extreme wearing environments. Simultaneously the roll surface should remain faultless to ensure good web quality and good runnability of the machine.

Important properties of roll covers are long operating life, good wear resistance and low heat generation under dynamic load. Especially, long operational life improves productivity of the machine. Operating life is depending on several factors. Specifically, wear resistance, tear strength and resistance to crack development are such factors.

Use of fillers in roll covers to adjust their properties is well known. Fillers are used, inter alia, to adjust ductility, strength, elasticity, wear resistance, hardness, thermal resistance and release properties of the roll cover. Typical fillers comprise metal particles or ceramic particles, such as silicates, silicon oxides, silicon carbides, aluminium oxide or carbon black. Examples of such fillers in roll covers are disclosed for example in EP 487 477. Fillers used less commonly and for special purposes are, for example, titanium dioxide and synthetic powders, such as disclosed in WO 2008000824. The amount of filler may be, for example, 10 - 80 parts-of-weight of filler to 100 parts-of-weight of polymer (phr). A problem with the use of fillers is that while fillers improve one of the roll cover properties, they often simultaneously decrease some other property. As a result, compromises are to be done.

DE 10 2007 000 505 discloses a roll coating intended for use in treatment of fibre webs, such as paper, board or tissue webs. The roll coating comprises at least one polyurethane elastomer, at least one filler and fibres.

There is a continuing need to improve the mechanical properties of roll covers in an easy and cost-effective manner.

An object of this invention is to minimise or even totally eliminate the disadvantages existing in the prior art.

Another object of the present invention is to provide a roll with improved mechanical properties, especially with improved wear resistance and optionally also with improved tensile strength, hardness, impact strength and/or elongation.

The invention is defined in the characterising parts of the enclosed independent claims. Some preferable embodiments of the invention are defined in the dependent claims. All described features apply both for the roll as well as its use, whenever applicable, even if it not necessarily always stated so.

Typical roll according to the present invention for use in a manufacture of a fibrous web comprising cellulosic fibres, comprises
- a roll body with a cylindrical surface, and
- a roll cover, which is arranged to cover the cylindrical surface of the roll body, the cover comprising a functional layer, which comprises a polymer matrix and filler particles embedded in the polymer matrix,
wherein the filler particles comprise hollow spherical particles of aluminium oxide, titanium oxide, zirconium oxide and/or silicon carbide, which hollow particles have a particle size of ≤ 200 µm.

The roll according to the invention is typically used in a paper machine, board machine, tissue machine or in a converting machine for a fibrous cellulosic web.

Now it has been surprisingly found that it is possible to improve more than one of the mechanical properties of the roll when the functional layer comprises hollow spherical particles of at least one specific inorganic oxide or silicon carbide. Especially unexpected advantageous effect has been observed in wear resistance which is much higher than could have been anticipated. It is currently assumed, without wishing to be bound by any theory, that it may be the hollow spherical form of the particles that produces the advantageous effects. It is anticipated that inside the functional layer the spherical particle surfaces may more easily "slide" in the polymer matrix than conventional angular or jagged particle forms with edges. The ductility of the roll cover becomes thus higher. On the surface area of the roll cover the spherical morphology of the filler particles produces lower friction between the rotating surfaces compared to irregular particle forms, which is beneficial in terms of wear properties that is an important feature especially in nip roll applications. Also, packing density of the filler is higher with spherical particles so that more filler may be used if desired without viscosity loss. Further, the hollow morphology of the particles provides a reduced density, which enhances the processing behaviour of the filler during the manufacture of the cover. The light-weight filler and the polymer are less likely to form separate phases in a casting container, as the heavy solid particles would do. As result the quality of the cast cover is more uniform.

In the present context the term "spherical" means that the particles have a shape of a ball or a sphere. The hollow spherical particles are three-dimensional round particles, with closed outer surface and hollow interior. The outer surface of the spherical particles is non-porous. The surface of the spherical particles may have small deviations, such as cavities or elevations from complete roundness. According to one embodiment the hollow spherical particles are three-dimensional completely round particles.

The roll cover according to the present invention preferably comprises hollow spherical particles of at least one oxide of aluminium, titanium and/or zirconium. According to an embodiment the roll cover may comprise a mixture of hollow spherical particles of at least two of the following oxides: aluminium oxide, titanium oxide and zirconium oxide.

According to one embodiment the roll cover comprises hollow spherical particles of silicon carbide, either alone or together with one or several of the hollow spherical particles of aluminium oxide, titanium oxide or zirconium oxide.

The roll body is normally made of metal, such as cast iron or hardened steel, or of fibre reinforced plastic, and it has a cylindrical surface. The diameter of the roll body may vary according its location of use. For example, the diameter may be 200 - 1500 mm. The length of the roll body depends on the width of the machine. Typically the length of roll body may be in the range of 2.5 - 12 m, usually 4 - 8 m.

The roll cover is arranged to enclose the cylindrical surface of the roll body. The roll cover forms a continuous sleeve around the surface of the roll body. The roll cover may comprise one or more layers. The outermost layer or the functional layer is the layer which is in contact with the fibre web or the fabric supporting the fibre web. The functional layer may be adhered directly to the roll surface or, more often, via one or more layers lying beneath the functional layer and between the roll surface, i.e. a base layer and one or more intermediate layer(s). The total thickness of the roll cover is typically 15 - 50 mm. The total thickness of the roll cover comprises all possible layers included in the roll cover.

The functional layer comprises a polymer matrix and filler particles embedded in the said polymer matrix. The filler particles, which comprise hollow spherical particles of the specified inorganic oxide or of silicon carbide, are substantially homogenously divided into the polymer matrix. This means that the concentration of filler particles, as well as the hollow spherical particles, is the same at both the inner and outer surface of the functional layer, as well as throughout the layer. The filler particles, including the hollow spherical particles, are homogenously divided in the axial and circumferential directions of the roll. The thickness of the functional layer may be 10 - 40 mm.

The polymer matrix of the functional layer may be rubber, thermosetting polymer or thermoplastic polymer. Suitable rubbers are, for example, natural rubbers, nitrile butadiene rubbers, hydrogenated nitrile butadiene rubbers, chloroprene rubbers ethylene propylene diene (EPDM) rubbers, chlorosulphonated polyethylene (CSM) rubbers, and any of their mixtures. Suitable thermosetting polymers are, for example, various polyurethane resins and epoxy resins. Suitable thermoplastic polymers, although less used, are, for example, fluorothermoplastic polymers and polyphenylene sulphide, polyether ketone, polyether ether ketone, polyphtalamide, polyamide, polyetherimide, polyethersulphone, polysulphone and any of their mixtures.

The hollow spherical particles have a particle size of ≤ 200 µm, preferably ≤ 100 µm, more preferably ≤ 50 µm. According to one embodiment of the invention the hollow spherical particles may have a particle size in a range of 0.01 - 200 µm, preferably 1 - 100 µm, more preferably 5 - 40 µm. It has been observed that when the particle size is within the defined ranges the roll cover shows good mechanical wear resistance and is smooth enough to ensure the suitability for web manufacturing processes.

According to one preferable embodiment of the invention the hollow spherical particles are particles of aluminium oxide. The aluminium oxide content of the hollow spherical particles may be > 95 weight-%, preferably > 97 weight-%, more preferably >99 weight-%. Preferably the hollow spherical particles comprise hollow spherical particles of alpha-Al₂O₃. For example, the hollow spherical particles may comprise 20 - 30 % of alpha-Al₂bO.₃ and 70 - 80 % of delta-Al₂9O₃. The hollow spherical particles may contain, in addition to aluminium oxide, trace amounts of trace oxides of iron, calcium, silicium and/or sodium oxide. The individual amounts of these trace oxides are typically < 0.3 weight-%, typically < 0.1 weight-%. The loss of ignition value for the spherical particles may be < 0.5 %.

According to one preferable embodiment at least 50 %, preferably at least 70 %, more preferably at least 80 %, even more preferably at least 90 %, of the filler particles are hollow spherical particles. It is possible to adjust the mechanical and dynamic properties of the roll cover by adjusting the amount of the hollow spherical particles in the polymer matrix.

The hollow spherical particles may have a hardness of ≥ 7 Moh, preferably > 8 Moh, more preferably > 8.5 Moh.

According to one embodiment of the present invention the hollow spherical particles comprises a shell wall surrounding an internal closed cavity. In other words, the hollow particles comprise an empty cavity inside the particle. The shell wall surrounds the internal cavity, and at the same time forms the outer surface or the hollow particle. The shell wall may have a thickness in the range of 1 - 50 µm, preferably 1 - 30 µm, more preferably 2 - 25 µm.

The roll cover may have a surface roughness in the range of 0.1 - 10 Ra, and/or hardness in the range of 25 ShD - 96 ShD, which approximately corresponds to P&J hardness in the range of 1 - 50.

According to one embodiment of the invention the hollow spherical may be surface modified. For example, coupling agents may be arranged in connection with the particle surface. Coupling agents improve the interaction between the surface of the hollow spherical particle and the surrounding polymer matrix. In this manner it is possible to improve the chemical compatibility between the spherical particles and the surrounding polymer matrix and consequentially the mechanical properties of the roll cover. Possible coupling agents may be selected, for example, from silane-based coupling agents. Silane based coupling agents may comprise vinyl, amino, epoxy and/or sulphide groups for proper interaction between the spherical inorganic and polymer matrix.

According to one embodiment of the invention the polymer matrix of the functional layer is rubber, which comprises at the maximum of 40 weight-%, preferably at the maximum of 25 weight-%, more preferably at the maximum of 7.5 weight-%, of hollow spherical particles. According to one embodiment the polymer matrix of the functional layer is rubber, which comprises 1 - 40 weight-%, preferably 1 - 25 weight-%, more preferably 2.5 - 7.5 weight-%, of hollow spherical particles.

According to another embodiment of the invention the polymer matrix of the functional layer is epoxy resin, which comprises at the maximum of 50 weight-% of hollow spherical particles, embedded into the matrix. Preferably the roll is a calender roll. According to another embodiment the roll may be a press roll, suction roll, sizer roll or a coater roll.

According to one embodiment of the invention the polymer matrix of the functional layer is polyurethane resin and it comprises at the maximum of 10 weight-% of hollow spherical particles, embedded into the matrix. Preferably the roll is a press roll, suction roll, sizer roll or a coater roll.

The polymer matrix of the functional layer may comprise additional filler particles in addition to hollow spherical particles. Further, the polymer matrix may comprise second, third and any successive additional filler particles. The additional filler particles may be selected from inorganic particles, such as particles of silica, silicon carbide, carbon black, titanium oxide, feldspar, kaolin; or from organic particles, such as particles of aramid or polyethylene or rubber. The additional filler particles may have an average particle diameter of less than 10 µm, typically in the range of 1 - 10 µm or 1 - 9 µm. Alternatively, the additional filler particles may have an average particle diameter of over 5 µm, preferably in the range of 10 - 300 µm. Use of one or more additional filler particles make it possible to adjust the mechanical properties in each or any layer of the roll cover in a proper, flexible and cost-effective manner.

According to one embodiment of the present invention the functional layer comprises both hollow spherical particles, preferably of aluminium oxide and at least non-hollow silica carbide particles as additional filler particles. It has been observed that this combination gives good performance properties for the roll cover, especially improved wear properties.

In case the functional layer comprises additional filler particles, the amount of hollow spherical particles is at least 30 weight-%, preferably at least 45 weight-%, more preferably at least 70 weight-%, of total weight of the filler particles. The total weight includes the weight of hollow spherical particles and additional filler particles.

According to on embodiment of the invention the functional layer comprises solely hollow spherical particles and is free from any other inorganic and/or organic filler particles. Especially the roll cover is free of particles of silica-based oxides and/or silicate. It has been observed that particles of silica-based oxides and silicates may not perform in satisfactory manner when used as fillers in roll covers, at least when compared to hollow spherical particles of aluminium, titanium and/or zirconium oxides.

The roll cover may comprise, in addition to the described functional layer, a base layer which is arranged preferably in direct contact with the roll surface, and at least one optional intermediate layer, which is arranged between the functional layer and the base layer. Base layer and the optional intermediate layer may comprise same or different polymer matrix as the functional layer. In case the roll cover has a base layer and optional intermediate layer, these layers may also comprise additional filler particles embedded in the polymer matrix. The polymer matrix of the base layer and the optional intermediate layer may comprise same or different additional filler particles as the functional layer. The additional filler particles in the different layers may be same or different. However, the base layer and the optional intermediate layer are preferably free of hollow spherical particles of aluminium oxide, titanium oxide, zirconium oxide and/or silicon carbide.

Alternatively, or in addition to additional filler particles, the functional layer, and the possible base and intermediate layers, may also comprise additives, such as polymerisation initiators, activators and accelerators, plasticisers, thermal stabilisers, filler dispersants. These additives may also be present in other layers of the cover.

Some embodiments of the invention are explained more closely in the following schematical non-limiting drawings, where
Figure 1 shows a nip roll arrangement in a paper or board machine, and
Figure 2 shows a more detailed view of a roll and roll cover.

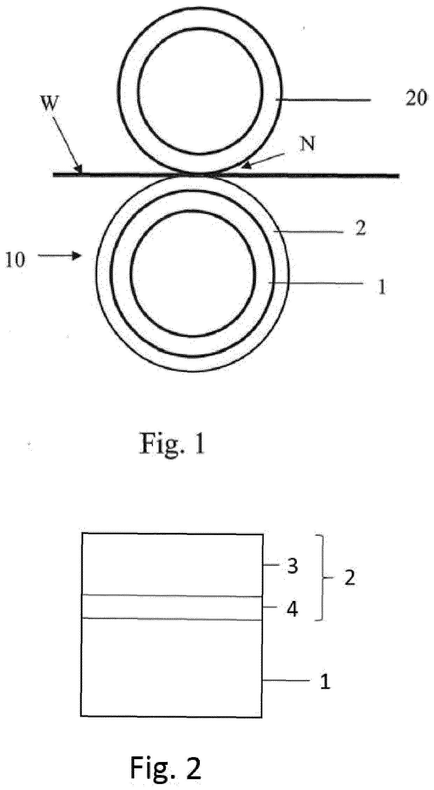

Figure 1 shows a nip roll arrangement in a paper or board machine. Two parallel rolls 10, 20 are located adjacent to each other and form a nip N between them. One or both of the rolls 10, 20 may be loadable against each other. Rolls 10, 20 may be rolls of a calender, a press, a coater or a sizer. A web W of a paper or board is running through the nip N either unsupported or supported by a belt or felt. Both rolls have a metal body or shell 1 and at least one of them has a roll cover 2, made of polymer and arranged to enclose the metal body or shell 1.

Figure 2 shows a more detailed view of a roll and roll cover. The cover 2 comprises at least a functional layer 3 which is the outermost layer of the cover 2 and provides the surface of the metal body 1 of the roll. During the manufacture of paper or board the functional layer 3 is in contact either with a fibrous web or a fabric supporting the fibrous web, and thus the functional layer is exposed to wear and the stress from the environment. The functional layer 3 comprises at least one filler and optionally reinforcing fibres.

Beneath the functional layer 3 there may be one or more intermediate layer(s) 4, which provide an adhering layer between the metal body 1 and the functional layer 3. The intermediate layer(s) 4 may further provide other tailored properties for the cover 2, for example in terms of grading hardness, thermal conductivity, etc. The intermediate layer(s) 4 may comprise fibre reinforcement. The one or more of the intermediate layer(s) 4 may further comprise at least one filler. The filler in the intermediate layer(s) may be the same as or different from the filler in the functional layer 3. In case of two or more intermediate layers, the filler in the individual intermediate layers may be the same or different. The amount of the filler in the intermediate layer 4 is preferably lower than the amount of the filler in the functional layer 3.

### EXPERIMENTAL

Some embodiments of the invention are described in the following non-limiting examples, where cover compositions for calender rolls or sizer rolls were tested using varying filler compositions.

### Examples 1 - 3

Three samples simulating calender roll cover were prepared. A resin composition comprising bisphenol-F epoxy resin, diethyl toluene diamine hardener and a filler was made. The resin composition was the same in all examples 1 - 3, only the filler type was varied as shown in Table 1.

Example 1 represents an embodiment according to the invention, while examples 2 and 3 represent comparative embodiments. In Example 1 the used filler comprised hollow aluminium oxide spheres having particle size of 5 - 40 µm (supplied by Kit-Stroy SPb, Russia). In Comparative Example 2 the used filler comprised silica having a D50 particle size of 3 µm (supplied by Sibelco, Finland) and in Comparative Example 3 the used filler comprised silicon carbide having a D50 particle size of 3 µm (supplied by Saint-Gobain).

Each resin composition thus obtained was applied to aramide fibre sheet and laminate plates with thickness of 12 mm was built. The laminate plates were cured at a temperature of 150 °C for 8 hours. Several mechanical tests were performed to the laminate plates. The wear test was performed as a rubber wheel wear test slightly modified from standard ASTM G65 giving material loss in mm³/Nm. Other tests performed were hardness (H), measured as Shore D hardness, tensile strength (TS), elongation at break (E) and impact strength (IS), measured as Charpy impact test. The measured value for the embodiment according to the invention (Example 1) is given in Table 1 as an absolute value, while the values for the comparative examples 2 and 3are given as percentage in relation to Example 1. A positive percentage value for wear indicates that the surface is more prone to wear, which is undesired. Negative percentage values for hardness, tensile strength, elongation and impact strength indicate that the surface has lower strength properties, which is undesired.

### Examples 4 - 5

Examples 4 - 5 compare the effect of material and hardness of the microsphere filler in a composite. Epoxy composition comprising bisphenol A epoxy resin, diethyl toluene diamine hardener and filler was applied on aramid fibre sheets in a similar way as described in examples 1 - 3.

Example 4 represents an embodiment according to the invention while Example 5 represents a comparative example. The laminate plate in Example 4 contains 25 w-% hollow aluminium oxide spheres with a particle size of 5 - 40 µm (supplied by Kit-Stroy SPb, Russia). In Example 5 the hollow aluminium oxide spheres of Example 4 were replaced with the same amount of alkali aluminosilicate microspheres having a D50 particle size of 5 µm and hardness of 7 Mohs Scale (supplied by 3M).

Surprisingly it was found that Example 4, i.e. an embodiment according to the invention, gave better performance over the comparative Example 5 for all tested properties. Thus, it may be assumed without wishing to be bound by a theory that it is not the spherical form of the particles alone which provides the improved performance for the roll cover. It seems that due to the hardness of the particles, possibly combined with the hollow morphology, the properties of the roll cover were improved.

### Examples 6 - 8

Three samples simulating sizer roll cover were prepared. A polyurethane composition was made by mixing PPDI-terminated polyether prepolymer, an amine hardener and a filler. The polyurethane composition was the same in all examples 6 - 8, only the filler type was varied as shown in Table 1.

Example 6 represents a comparative example, while Example 7 and Example 8 represent embodiments according to the invention. In comparative Example 6 the filler was calcined alumina with particle size of 3 µm (supplied by Almatis). In Examples 7 and 8 the calcined alumina filler of Example 6 was replaced by hollow aluminium oxide spheres having particle size of 5 - 40 µm (supplied by Kit-Stroy SPb, Russia). The obtained resin compositions with filler were mold-cast and post-cured at 130 °C for 20 hours. The wear test was performed as a rubber wheel wear test slightly modified from ASTM G65 giving material loss as mm³/Nm. The measured value for the comparative test is given as an absolute value in Table 1 while the values for the Examples 7 and 8 according to the invention are given as percentage in relation to Comparative Example 6. A negative percentage value for wear indicates that the surface is more resistant to wear, which is desired.

### Examples 9 - 10

Acrylonitrile butadiene rubber with a carbon black content of about 70 phr and cured hardness of 85 Shore A was used as the test matrix for hollow aluminium oxide spheres having particle size of 5 - 40 µm (supplied by Kit-Stroy SPb, Russia). By adding 5 w-% of hollow aluminium oxide spheres into the rubber composition the abrasion loss decreased by 30 %. In Examples 9 - 10 the test method for wear was DIN 53516, giving abrasion loss in mm3.

It can be seen from results in Table 1 that the improvements which are obtained by roll cover compositions comprising hollow aluminium oxide particles are on surprisingly high level in all aspects. Especially, abrasive wear values showed good and unexpected improvement with all tested polymer types. It can be seen that the obtained improvement in abrasive wear was over 20%.

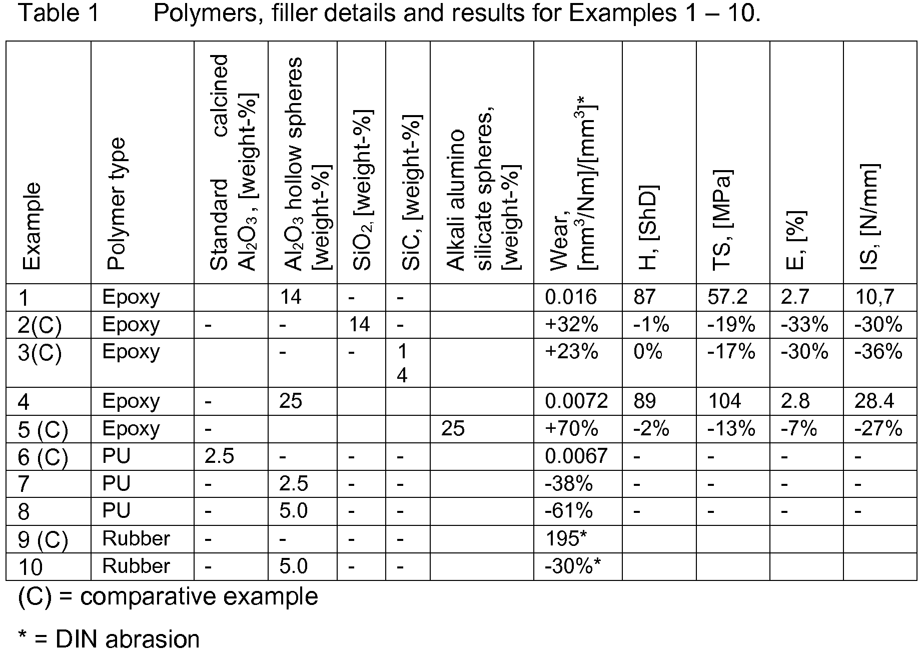

### Examples 11-14

Four samples simulating calender roll cover were prepared using epoxy composition comprising bisphenol epoxy resin, diethyl toluene diamine hardener and a filler. The filler used was silicon carbide, hollow aluminium microspheres or their mixture. Used fillers and their amounts in Examples 11 - 14 are given in Table 2. In Comparative Example 11 only SiC was used as a filler. In Examples 12 - 14 SiC filler was gradually replaced by the hollow aluminium spheres, in portions of 50 %, 75 % and 100 %.

The mechanical tests were performed in the same manner as for Examples 1 - 3, and the results are given in the same manner as for Examples 6 - 8, using the measured value for the Comparative Example 11 as an absolute value.

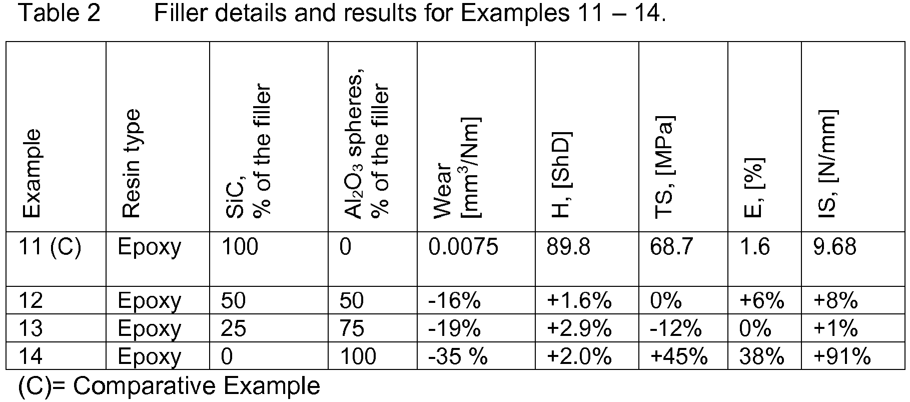

It can be seen from results in Table 2 that improvements may be obtained by roll cover compositions comprising hollow aluminium oxide particles almost in all aspects. Especially, abrasive wear values showed good and unexpected improvement.

When testing dynamic behavior in terms of tan-delta as a function of temperature it was found that a roll cover according to the invention and comprising hollow aluminium spheres behaved very similarly, almost identically to the SiC filled roll cover. Based on all the tests performed it can be concluded that all the basic properties of a roll cover were improved without compromises, which is rarely achieved by a single raw material alone.

Even if the invention was described with reference to what at present seems to be the most practical and preferred embodiments, it is appreciated that the invention shall not be limited to the embodiments described above, but the invention is intended to cover also different modifications and equivalent technical solutions within the scope of the enclosed claims.

## Claims

1. A roll (10, 20) for use in a manufacture of a fibrous web comprising cellulosic fibres, the roll (10, 20) comprising
- a roll body (1) with a cylindrical surface, and
- a roll cover (2), which is arranged to cover the cylindrical surface of the roll body (1), the cover (2) comprising a functional layer (3), which comprises a polymer matrix and filler particles embedded in the polymer matrix,
wherein the filler particles comprise hollow spherical particles of aluminium oxide, titanium oxide, zirconium oxide and/or silicon carbide, which hollow particles have a particle size of ≤ 200 µm.

2. Roll (10, 20) according to claim 1, **characterised in that** at least 50 %, preferably at least 70 %, more preferably at least 80 %, even more preferably at least 90 %, of the filler particles are hollow spherical particles.

3. Roll (10, 20) according to claim 1 or 2, **characterised in that** the hollow spherical particles comprise a shell wall surrounding an internal closed cavity, wherein the shell wall has a thickness in the range of 1 - 50 µm, preferably 1 - 30 µm, more preferably 2 - 25 µm.

4. Roll (10, 20) according to any of preceding claims 1, 2 or 3, **characterised in that** the hollow spherical particles have a particle size in a range of 0.01 - 200 µm, preferably 1 - 100 µm, more preferably 5 - 40 µm.

5. Roll (10, 20) according to any of preceding claims 1 - 4, **characterised in that** the hollow spherical particles have a hardness of ≥ 7 Moh, preferably > 8 Moh, more preferably > 8.5 Moh.

6. Roll (10, 20) according to any of preceding claims 1 - 5, **characterised in that** the hollow spherical particles are particles of aluminium oxide.

7. Roll (10, 20) according to any of preceding claims 1 - 6, **characterised in that** the polymer matrix of the functional layer (3) is rubber, thermosetting polymer or thermoplastic polymer.

8. Roll according (10, 20) to claim 7, **characterised in that** the polymer matrix of the functional layer (3) is rubber, which comprises at the maximum of 40 weight-%, preferably at the maximum of 25 weight-%, more preferably at the maximum of 7.5 weight-% of hollow spherical particles.

9. Roll according (10, 20) to claim 7, **characterised in that** the polymer matrix of the functional layer (3) is epoxy resin, which comprises at the maximum of 50 weight-% of hollow spherical particles, embedded into the matrix.

10. Roll (10, 20) according to claim 9, **characterised in that** the roll (10, 20) is a calender roll.

11. Roll (10, 20) according to claim 7, **characterised in that** the polymer matrix of the functional layer (3) is polyurethane resin and it comprises at the maximum of 10 weight-% of hollow spherical particles, embedded into the matrix.

12. Roll (10, 20) according to claim 8 or 11, **characterised in that** the roll (10, 20) is a press roll, suction roll, sizer roll or a coater roll.

13. Roll (10, 20) according to any of preceding claims 1 - 12, **characterised in that** the polymer matrix of the functional layer (3) further comprises additional filler particles and/or additives.

14. Roll (10, 20) according to any of preceding claims 1 - 13, **characterised in that** in addition to the functional layer (3) the roll cover (2) comprises a base layer, which is arranged in contact with the roll body surface and an optional intermediate layer (4), which is arranged between the functional layer (3) and the base layer.

15. Use of a roll (10, 20) according to any of claims 1 - 14 in a paper machine, board machine, tissue machine or in a converting machine for a fibrous cellulosic web.

## Patentansprüche

1. Walze (10, 20) zur Verwendung bei einer Herstellung eines Faserflors, der Zellulosefasern umfasst, wobei die Walze (10, 20) Folgendes umfasst:
- einen Walzenkörper (1) mit einer zylindrischen Oberfläche und
- eine Walzenabdeckung (2), die dafür angeordnet ist, die zylindrische Oberfläche des Walzenkörpers (1) abzudecken, wobei die Abdeckung (2) eine Funktionsschicht (3) umfasst, die eine Polymermatrix und Füllstoffteilchen, die in der Polymermatrix eingebettet sind, umfasst,
wobei die Füllstoffteilchen hohle kugelförmige Teilchen aus Aluminiumoxid, Titanoxid, Zirkoniumoxid und/oder Siliziumkarbid umfassen, wobei die hohlen Teilchen eine Teilchengröße von < 200 µm aufweisen.

2. Walze (10, 20) nach Anspruch 1, **dadurch gekennzeichnet, dass** wenigstens 50 %, vorzugsweise wenigstens 70 %, insbesondere wenigstens 80 %, noch bevorzugter wenigstens 90 % der Füllstoffteilchen hohle kugelförmige Teilchen sind.

3. Walze (10, 20) nach Anspruch 1 oder 2, **dadurch gekennzeichnet, dass** die hohlen kugelförmigen Teilchen eine Hüllenwand umfassen, die einen inneren geschlossenen Hohlraum umgibt, wobei die Hüllenwand eine Dicke in dem Bereich von 1 bis 50 µm, vorzugsweise 1 bis 30 µm, insbesondere 2 bis 25 µm, aufweist.

4. Walze (10, 20) nach einem der vorhergehenden Ansprüche 1, 2 oder 3, **dadurch gekennzeichnet, dass** die hohlen kugelförmigen Teilchen eine Teilchengröße in einem Bereich von 0,01 bis 200 µm, vorzugsweise 1 bis 100 µm, insbesondere 5 bis 40 µm, aufweisen.

5. Walze (10, 20) nach einem der vorhergehenden Ansprüche 1 bis 4, **dadurch gekennzeichnet, dass** die hohlen kugelförmigen Teilchen eine Härte von ≥ 7 nach Mohs, vorzugsweise > 8 nach Mohs, insbesondere > 8,5 nach Mohs, aufweisen.

6. Walze (10, 20) nach einem der vorhergehenden Ansprüche 1 bis 5, **dadurch gekennzeichnet, dass** die hohlen kugelförmigen Teilchen Teilchen aus Aluminiumoxid sind.

7. Walze (10, 20) nach einem der vorhergehenden Ansprüche 1 bis 6, **dadurch gekennzeichnet, dass** die Polymermatrix der Funktionsschicht (3) Gummi, warm aushärtendes Polymer oder thermoplastisches Polymer ist.

8. Walze (10, 20) nach Anspruch 7, **dadurch gekennzeichnet, dass** die Polymermatrix der Funktionsschicht (3) Gummi ist, der höchstens 40 Gew.-%, vorzugsweise höchstens 25 Gew.-%, insbesondere höchstens 7,5 Gew.-%, an hohlen kugelförmigen Teilchen umfasst.

9. Walze (10, 20) nach Anspruch 7, **dadurch gekennzeichnet, dass** die Polymermatrix der Funktionsschicht (3) Epoxidharz ist, das höchstens 50 Gew.-% an hohlen kugelförmigen Teilchen, die in der Matrix eingebettet sind, umfasst.

10. Walze (10, 20) nach Anspruch 9, **dadurch gekennzeichnet, dass** die Walze (10, 20) eine Kalanderwalze ist.

11. Walze (10, 20) nach Anspruch 7, **dadurch gekennzeichnet, dass** die Polymermatrix der Funktionsschicht (3) Polyurethanharz ist und sie höchstens 10 Gew.-% an hohlen kugelförmigen Teilchen, die in der Matrix eingebettet sind, umfasst.

12. Walze (10, 20) nach Anspruch 8 oder 11, **dadurch gekennzeichnet, dass** die Walze (10, 20) eine Presswalze, eine Saugwalze, eine Schlichtwalze oder eine Streichwalze ist.

13. Walze (10, 20) nach einem der vorhergehenden Ansprüche 1 bis 12, **dadurch gekennzeichnet, dass** die Polymermatrix der Funktionsschicht (3) ferner zusätzliche Füllstoffteilchen und/oder Zusatzstoffe umfasst.

14. Walze (10, 20) nach einem der vorhergehenden Ansprüche 1 bis 13, **dadurch gekennzeichnet, dass** die Walzenabdeckung (2) zusätzlich zu der Funktionsschicht (3) eine Basisschicht, die in Berührung mit der Walzenkörper-Oberfläche angeordnet ist, und eine wahlweise Zwischenschicht (4), die zwischen der Funktionsschicht (3) und der Basisschicht angeordnet ist, umfasst.

15. Verwendung einer Walze (10, 20) nach einem der vorhergehenden Ansprüche 1 bis 14 in einer Papiermaschine, einer Kartonmaschine, einer Tissuemaschine oder in einer Verarbeitungsmaschine für einen Zellulose-Faserflor.

## Revendications

1. Rouleau (10, 20) destiné à une utilisation dans une fabrication d'une bande fibreuse contenant des fibres cellulosiques, le rouleau (10, 20) comprenant
- un corps de rouleau (1) doté d'une surface cylindrique, et
- un recouvrement de rouleau (2) qui est conçu pour couvrir la surface cylindrique du corps de rouleau (1), le recouvrement (2) comprenant une couche fonctionnelle (3) qui comprend une matrice en polymère et des particules de charge encastrées dans la matrice en polymère,
les particules de charge comprenant des particules sphériques creuses d'oxyde d'aluminium, d'oxyde de titane, d'oxyde de zirconium et/ou de carbure de silicone, lesquelles particules 32 ont une taille de particules ≤ 200 µm.

2. Rouleau (10, 20) selon la revendication 1, **caractérisé en ce qu'**au moins 50 %, de préférence au moins 70 %, plus préférablement au moins 80 %, encore plus préférablement au moins 90 %, des particules de charge sont des particules sphériques creuses.

3. Rouleau (10, 20) selon la revendication 1 ou 2, **caractérisé en ce que** les particules sphériques creuses comprennent une paroi en coquille entourant une cavité interne fermée, la paroi en coquille ayant une épaisseur de l'ordre de 1 à 50 µm, préférablement 1 à 30 µm, plus préférablement 2 à 25 µm.

4. Rouleau (10, 20) selon l'une quelconque des revendications précédentes 1, 2 ou 3, **caractérisé en ce que** les particules sphériques creuses ont une taille de particules de l'ordre de 0,01 à 200 µm, préférablement 1 à 100 µm, plus préférablement 5 à 40 µm.

5. Rouleau (10, 20) selon l'une quelconque des revendications précédentes 1 à 4, **caractérisé en ce que** les particules sphériques creuses ont une dureté ≥ 7 Moh, préférablement > 8 Moh, plus préférablement > 8,5 Moh.

6. Rouleau (10, 20) selon l'une quelconque des revendications précédentes 1 à 5, **caractérisé en ce que** les particules sphériques creuses sont des particules d'oxyde d'aluminium.

7. Rouleau (10, 20) selon l'une quelconque des revendications précédentes 1 à 6, **caractérisé en ce que** la matrice en polymère de la couche fonctionnelle (3) est du caoutchouc, du polymère thermodurcissable ou du polymère thermoplastique.

8. Rouleau (10, 20) selon la revendication 7, **caractérisé en ce que** la matrice en polymère de la couche fonctionnelle (3) est du caoutchouc qui contient au maximum 40 % en poids, préférablement au maximum 25 % en poids, plus préférablement au maximum 7,5 % en poids de particules sphériques creuses.

9. Rouleau (10, 20) selon la revendication 7, **caractérisé en ce que** la matrice en polymère de la couche fonctionnelle (3) est de la résine époxy qui comprend au moins maximum 50 % en poids de particules sphériques creuses encastrées dans la matrice.

10. Rouleau (10, 20) selon la revendication 9, **caractérisé en ce que** le rouleau (10, 20) est un rouleau de calandre.

11. Rouleau (10, 20) selon la revendication 7, **caractérisé en ce que** la matrice en polymère de la couche fonctionnelle (3) est de la résine de polyuréthane et qu'elle comprend au maximum 10 % en poids de particules sphériques creuses encastrées dans la matrice.

12. Rouleau (10, 20) selon la revendication 8 ou 11, **caractérisé en ce que** le rouleau (10, 20) est un rouleau de compression, un rouleau d'aspiration, un rouleau de dimensionnement ou un rouleau de revêtement.

13. Rouleau (10, 20) selon l'une quelconque des revendications précédentes 1 à 12, **caractérisé en ce que** la matrice en polymère de la couche fonctionnelle (3) comprend en outre des particules de charge et/ou des additifs supplémentaires.

14. Rouleau (10, 20) selon l'une quelconque des revendications précédentes 1 à 13, **caractérisé en ce que**, en plus de la couche fonctionnelle (3), le recouvrement de rouleau (2) comprend une couche de base qui est disposée en contact avec la surface du corps de rouleau et une couche intermédiaire optionnelle (4) qui est disposée entre la couche fonctionnelle (3) et la couche de base.

15. Utilisation d'un rouleau (10, 20) selon l'une quelconque des revendications précédentes 1 à 14 dans une machine de fabrication de papier, une machine de fabrication de carton, une machine de fabrication de tissu ou une machine de conversion pour bande cellulosique fibreuse.
